**Europäisches Patentamt**

**European Patent Office**

**Office européen des brevets**

(19)

(11) Veröffentlichungsnummer: **0 198 548**
A2

(12) ## EUROPÄISCHE PATENTANMELDUNG

(21) Anmeldenummer: **86200607.9**

(22) Anmeldetag: **11.04.86**

(51) Int. Cl.⁴: **H 04 B 17/00**

(30) Priorität: **15.04.85 DE 3513361**

(43) Veröffentlichungstag der Anmeldung: **22.10.86** Patentblatt **86/43**

(84) Benannte Vertragsstaaten: **DE FR GB IT SE**

(71) Anmelder: **Philips Patentverwaltung GmbH, Billstrasse 80, D-2000 Hamburg 28 (DE)**

(84) Benannte Vertragsstaaten: **DE**

(71) Anmelder: **N.V. Philips' Gloeilampenfabrieken, Groenewoudseweg 1, NL-5621 BA Eindhoven (NL)**

(84) Benannte Vertragsstaaten: **FR GB IT SE**

(72) Erfinder: **Koch, Wolfgang, Dr.-Ing., Simmelberger Weg 29a, D-8501 Heroldsberg (DE)**

(74) Vertreter: **Dreykorn-Lindner, Werner et al, Philips Patentverwaltung GmbH Postfach 10 51 49 Billstrasse 80, D-2000 Hamburg 28 (DE)**

(54) **Verfahren und Schaltungsanordnung zur Qualitätsmessung von Funkübertragungskanälen eines Funkübertragungssystems.**

(57) Zur Qualitätsmessung von Funkübertragungskanälen sind eine Reihe von Messverfahren bekannt, bei denen das Mass für die auftretende Störung entweder aus der empfangenen Feldstärke oder aus Amplituden-Schwankungen des HF-Trägersignals oder durch Messung des Ausserbandrauschens oder unter Zuhilfenahme eines besonderen Messtons oder unter Messung des Jitters durchgeführt wird. Hierbei wird durch Filterung und Mittelung der gefilterten Signale jeweils ein Qualitätsindikator abgeleitet.

Zur Qualitätsmessung des Funkübertragungskanals während der laufenden Übertragung und zur Erfassung von Gleichkanalstörungen werden durch Störungen verursachte schnelle Schwankungen von durch Fading verursachten, langsamen Schwankungen getrennt, gemessen und der Qualitätsindikator aus den Messgrössen von schnellen und langsamen Schwankungen abgeleitet. Durch die getrennte Messung der Summe von der Leistung des Empfängereingangsrauschens und der Leistung von Gleichkanalstörern kann auf einfache Art und Weise eine Auswahl der Feststation mit bestem Empfangsverhältnis vorgenommen werden.

Philips Patentverwaltung GmbH

N.V. Philips'Gloeilampenfabrieken

0198548

PHD 85 322 EP

20.02.1986

Verfahren und Schaltungsanordnung zur Qualitätsmessung von Funkübertragungskanälen eines Funkübertragungssystems

Die Erfindung betrifft ein Verfahren zur Qualitätsmessung von Funkübertragungskanälen eines Funkübertragungssystems gemäß dem Oberbegriff des Patentanspruchs 1.

Zur Qualitätsmessung von Funkübertragungskanälen, insbesondere zur Erfassung von Störungen der Nutzinformation, wird häufig die empfangene Feldstärke herangezogen.

Ein solches Qualitätsmeßverfahren weist den Nachteil auf, daß ein Maß für die auftretenden Störungen nur dann abgeleitet werden kann, wenn die Leistung des HF-Störsignals als konstant angesehen werden kann. In einem Funkübertragungssystem ist diese Voraussetzung in der Regel jedoch nicht gegeben. Zum einen ändert sich die Störleistung des Empfängereingangsrauschens infolge Temperaturschwankungen und zum anderen verursachen externe Störquellen wie zum Beispiel Gleichkanalsender (wie sie in einem zellularen Funkübertragungssystem vorhanden sein können) eine sich ändernde HF-Störleistung. Diese bei beweglichen Funkstationen erheblich schwankenden Störleistungen führen dazu, daß insbesondere in interferenzbegrenzten zellularen Funknetzen die Feldstärke als Qualitätsindikator nicht geeignet ist.

Aus der DE-AS 27 38 800 ist ein Funknachrichtenübertragungssystem mit Frequenz- und/oder Phasenmodulation bekannt, bei dem die durch Störungen verursachten Amplitudenschwankungen des HF-Trägersignals zur quantitativen Erfassung der Störung herangezogen wird. Voraussetzung ist eine relativ konstante Leistung des empfangenen Nutzsignals. In Funkübertragungssystemen mit beweglichen Funkstationen treten jedoch Amplitudenschwankungen infolge von Fading und Funkabschattungen auf, welche in gleicher Größenordnung sowohl bei guten Empfangsverhältnissen als auch bei schlechten Empfangsverhältnissen vorhanden sind, so daß die Messung der Amplitudenschwankungen des HF-Trägersignals als Qualitätsindikator nicht geeignet ist.

Aus Jakes, Microwave Mobile Communications, John Wiley, 1974 ist es bekannt, das Signal-Rauschverhältnis im Basisband nach der Demodulation zu erfassen. Hierbei wird das Rauschen außerhalb des Nutzbandes gemessen (Außerbandrauschen), wobei diese Messung bei bandbreiteeffizienten digitalen Modulationsverfahren oft nicht anwendbar ist, da die niederfrequenten Nutzsignale nicht oder kaum bandbegrenzt sind. Das Signal-Rauschverhältnis im Basisband nach der Demodulation ist in einem digitalen Funkübertragunssystem häufig auch nicht erfaßbar.

Weiterhin ist aus der DE-AS 26 12 476 ein Sprechfunksystem bekannt, bei dem eine Signal-/Stör-Abstandsmessung unter zu Hilfnahme eines Meßtones durchgeführt wird. Hierbei wird das NF-Signal- Rauschverhältnis mit Hilfe des oberhalb des Nutzfrequenzbands liegenden Pilottons (Meßtons) gemessen, wobei während der Aussendung des Pilottons im Nutz-NF-Band kein Signal übertragen wird, so daß die Störleistung gemessen werden kann.

Dieses Verfahren zur Qualitätsmessung weist jedoch den Nachteil auf, daß während einer laufenden Nachrichtenübertragung keine Störmessung erfolgen kann.

Weiterhin ist aus IEEE, Journal of Selected Areas in Communications, Vol. SAC-2, No4, July 1984, "Digital Portable Transceiver Using GMSK Modem and ADM Codec, H. Suzuki et al, ein Verfahren zur Qualitätsmessung bekannt, bei dem der Jitter des empfangenen HF-Trägers zur Störmessung verwendet wird.

Dieses Verfahren ist jedoch nur bei kohärenten Demodulationsverfahren anwendbar, bei denen der Träger phasensynchron im Empfänger nachgeführt wird. Derartige Modulationsverfahren sind jedoch in Funkübertragungssystemen mit schnell beweglichen Funkstationen und mit höheren Trägerfrequenzen zur Zeit nicht anwendbar.

Weiterhin wird häufig bei digitaler Übertragung der Nachricht der Jitter des empfangenen und rekonstruierten Binärsignals als Qualitätsmaß herangezogen.

Ein solches Verfahren zur Qualitätsmessung weist jedoch den Nachteil auf, daß bei modernen digitalen Funkübertragungssytemen mit bandbreiteeffizienten Modulationsverfahren wie TFM oder GMSK der Taktjitter nur schwer zugänglich ist. Vor allem bei schnell bewegten Empfänger tritt durch die "Random-FM" bereits ein Grundjitter auf. Insbesondere bei höheren Datenraten ist der Jitter daher nicht zur Beurteilung der Empfangsqualität geeignet.

-4-

Der Erfindung liegt die Aufgabe zugrunde, bei einem Funkübertragungssystem mit frequenz- oder/und phasenmodulierten Träger die Qualität des Funkübertragungskanals während der laufenden Übertragung auf einfache Art und Weise zu messen. Bei der Qualitätsmessung soll auch die Größe von Gleichkanalstörungen, wie sie in einem zellularen Funkübertragungssystem auftreten können, erfaßt werden und das Verfahren zur Qualitätsmessung soll unabhängig vom im Funkübertragungssystem verwendeten Modulationsverfahren sein.

Diese Aufgabe wird erfindungsgemäß durch ein Verfahren zur Qualitätsmessung gemäß den Merkmalen des Patentanspruchs 1 gelöst.

Das erfindungsgemäße Verfahren zur Qualitätsmessung kann in vorteilhafter Weise bei der Auswahl des Funkübertragungskanals mit den besten Übertragungsverhältnissen angewendet werden. Das Verfahren kann auch bei Diversity-Empfang eingesetzt werden. Das erfindungsgemäße Verfahren weist den Vorteil auf, daß die Meßgrößen bereits aus Signalen in der HF-Ebene abgeleitet werden, so daß für die Qualitätsmessung in jedem der Diversity-Zweige nur ein geringer Schaltungsaufwand erforderlich ist. Beim Dekodierverfahren kann das bei der Qualitätsmessung gewonnene Maß als Nebeninformation mitverwendet werden.

Die Schaltungsanordnung zur Realisierung des Verfahrens ist einfach aufgebaut und es ist in den beweglichen Funkstationen nur ein geringer zusätzlicher Schaltungsaufwand erforderlich.

Die Erfindung wird im folgenden anhand einer in der Zeichnung dargestellten Ausführungsform näher beschrieben und erläutert. Es zeigt:

Fig. 1 das Blockschaltbild der beim erfindungsgemäßen Verfahren verwendeten Schaltungsanordnung,

Fig. 2 das Leistungsdichtespektrum der Empfangsfeldstärke bei einer fahrenden Empfangseinrichtung,

Fig. 3 die Überlagerung von Nutz- und Störsignal in Zeigerdarstellung,

Fig. 4 die bei einer Meßfahrt aufgenommenen Leistungsdichtespektren von Feldstärkesignalen bei Gleichkanalstörungen und

Fig. 5 den zeitlichen Verlauf der Feldstärken bei Gleichkanalstörungen.

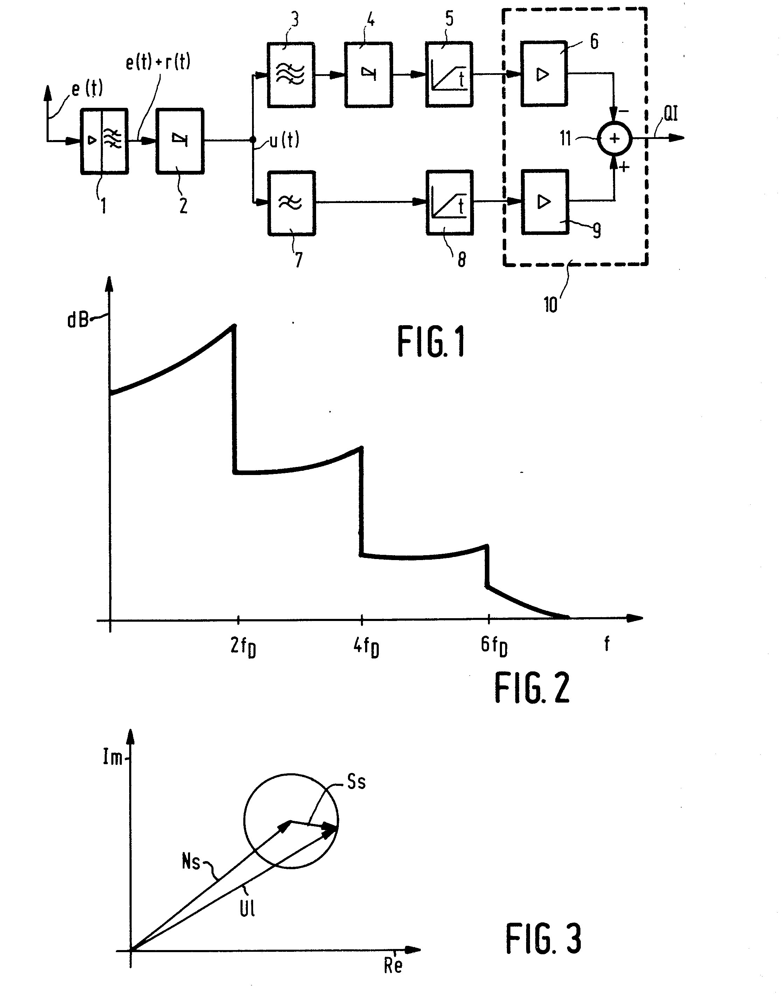

In Fig. 1 ist eine Ausführungsform einer Schaltungsanordnung zur Realisierung des erfindungsgemäßen Verfahrens dargestellt. Das von der Antenne empfangene Eingangssignal e(t) wird einer Empfängereingangsstufe 1 zugeführt. Die Empfängereingangsstufe 1 enthält einen Verstärker, gegebenenfalls eine Mischstufe sowie einen nachgeschalteten Bandpaß. Ein am Ausgang der Empfängereingangsstufe 1 auftretendes Signal wird einem ersten AM-Demodulator 2 zugeführt. Dessen Ausgangssignal u(t) ist proportional der Einhüllenden der komplexen Summe aus Empfängereingangsspannung (Eingangssignal) e(t) und einem Empfängereingangsrauschen r(t).

Zur Ermittlung der Leistung des Störsignals wird das Spannungssignal u(t) einem Bandpaß 3 zugeführt. Der Bandpaß 3 ist mit einem zweiten AM-Demodulator 4 verbunden, welcher die Einhüllende des so gefilterten Signals liefert. Der zweite AM-Demodulator 4 ist mit einem Kurzzeitintegrator 5 verbunden, welcher eine quadratische Mittelung der Einhüllenden des gefilterten Signals durchführt. Am Ausgang des Kurzzeitintegrators 5 ist ein Maß für die Leistung des Störsignals abgreifbar.

Zur Ermittlung der Leistung des Nutzsignals wird das Spannungssignal u(t) einem Tiefpaß 7 zugeführt. Bei geeigneter Wahl der Grenzfrequenz des Tiefpasses 7 wird die Leistung des Störsignals stark gedämpft, während die Leistung des Nutzsignals nur unwesentlich verändert wird. Der Tiefpaß 7 ist mit einem Kurzzeitintegrator 8 verbunden, welcher eine quadratische Mittelung des zugeführten Signals durchführt. Am Ausgang des Kurzzeitintegrators 8 ist ein Maß für die Leistung des Nutzsignals abgreifbar.

Die Ausgangssignale der beiden Kurzzeitintegratoren 5, 8 werden einer Verknüpfungsschaltung 10 zugeführt. Bei einer bevorzugten Ausführungsform (gemäß Fig. 1) besteht die Verknüpfungsschaltung 10 aus zwei logarithmischen Verstärkern 6, 9 und einer Einrichtung 11 zur Bildung der Differenz zwischen den Ausgangssignalen der beiden logarithmischen Verstärker 6, 9. Am Ausgang der Verknüpfungsschaltung 10 ist ein Qualitätsindikator QI abgreifbar, welcher ein Maß für den Pegel des Leistungsverhältnisses von Nutz- und Störsignal innerhalb eines Zeitintervalls ist, dessen Länge der Integrationszeit der Kurzzeitintegratoren 5, 8 entspricht.

Durch geeignete Dimensionierung der Filter, d. h. des Bandpasses 3 und des Tiefpasses 7, kann erreicht werden, daß das Ausgangssignal der Verknüpfungsschaltung 10 im weiten Bereich proportional zum Pegel des Signal-/ Störverhältnisses ist. Die Grenzfrequenzen müssen so gewählt werden, daß die Bedingung

$$(1) \quad \text{Min} \left\{ f_{TP}, f_{BPu} \right\} > 2 f_{Dmax}$$

erfüllt ist. Hierbei ist mit $f_{TP}$ die Grenzfrequenz des Tiefpasses 7, mit $f_{BPu}$ die untere Grenzfrequenz des Bandpasses 3 und mit $f_{Dmax}$ die maximale Dopplerfrequenz bezeichnet. Die maximale Dopplerfrequenz $f_{Dmax}$ ergibt sich aus der maximalen Geschwindigkeit $v_{max}$ des Empfängers und der Wellenlänge $\lambda$ bei der Trägerfrequenz zu

$$(2) \quad f_{Dmax} = v_{max} / \lambda$$

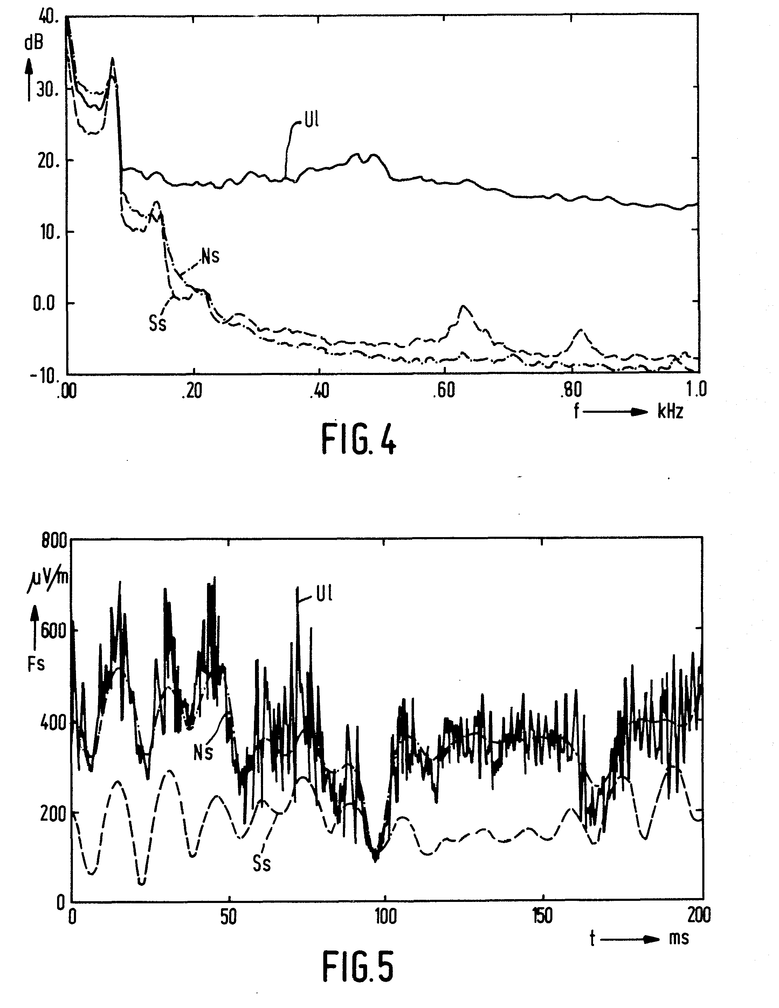

Da häufig noch erhebliche Leistungsanteile des Nutzsignals bis zum 6-fachen der maximalen Dopplerfrequenz $f_{Dmax}$ auftreten (siehe Fig. 4), werden die Filter so dimensioniert, daß die niedrigste Frequenz von $f_{BPu}$ oder $f_{TP}$ nicht unter dem 6-fachen der maximalen Dopplerfrequenz $f_{Dmax}$ liegt.

Die Wahl der Integrationszeit T der Kurzzeitintegratoren 5, 8 richtet sich nach der Anwendung des erfindungsgemäßen Verfahrens. Für Diversity-Empfang oder für die Gewinnung von Nebeninformationen für Kanaldecodierverfahren wird die Integrationszeit T gemäß

$$(3) \quad T \ll 1/2 f_{Dmax}$$

gewählt. Für die Auswahl von einer ortsfesten Funkstation mit dem besten Empfangsverhältnis ist eine wesentlich längere Integrationszeit T erforderlich.

Die in Fig. 1 dargestellte Ausführungsform ist nur eine von vielen Ausführungsformen. Werden keine hohen Ansprüche an die Meßgenauigkeit gestellt, so kann die Schaltungsanordnung gemäß Fig. 1 mit einfachen Mitteln aufgebaut werden. Beispielsweise kann für den zweiten AM-Demodulator 4 und für den Kurzzeitintegrator 5 eine Schaltungsanordnung bestehend aus einem Gleichrichter und einem nachgeschalteten RC-Glied benutzt werden. Die dabei durchgeführte lineare Mittelung ist dann ein Maß für die quadratische Mittelung, wenn die Amplitudenstatistik des Eingangssignals bekannt ist.

Durch Änderung der Schaltungsanordnung gemäß Fig. 1 können auch andere Qualitätsindikatoren QI abgeleitet werden. Z. B. kann durch Ersetzen der quadratischen Mittelung im Kurzzeitintegrator 8 durch eine lineare Mittelung das Nutzspannung-Störleistungsverhältnis, welches bei Diversity-Empfang benötigt wird, ermittelt werden.

Für die der Erfindung zugrunde liegende Erkenntnis, daß bei Gleichkanalstörungen das Spektrum annähernd weiß ist, wird im folgenden anhand der Fig. 2 bis 5 die zugehörige theoretische Begründung abgeleitet. Das Spektrum der Einhüllenden des Nutzsignals weist oberhalb einer bestimmten Frequenz keine nennenswerte Leistungsanteile mehr auf. Bei fahrenden Empfängern fällt das Spektrum bei einem Vielfachen der doppelten Dopplerfrequenz $f_D$ deutlich ab. In Fig. 2 ist das Leistungsdichte-Spektrum der Empfangsfeldstärke bei einer bewegten Empfangseinrichtung dargestellt. Weiterhin ist bekannt, daß das Empfängereingangsrauschen r(t) als ein Signal mit Gauß'scher Augenblickswertverteilung und konstantem Leitungsdichte-Spektrum innerhalb der interessierenden HF-Bandbreite beschrieben werden kann.

0198548

In Fig. 3 ist die vektorielle Addition beider Signale (Nutz- und Störsignal) in der komplexen Ebene dargestellt. Die gemessene Feldstärke ist proportional dem Betrag des resultierenden Zeigers. Das Spektrum dieses Meßsignals ist bei genügend großem Signal-Rauschabstand etwa gleich der Addition der Leistungsdichte-Spektren von Nutzfeldstärke und Eingangsrauschen. Da unterhalb eines gewissen Signal- Rauschabstands der Leistungsanteil der Nutzfeldstärke bei höheren Frequenzen vernachlässigbar ist, kann durch Bandpaßfilterung (im Bandpaß 3) ein Signal gewonnen werden, dessen Leistung ein Maß für die Leistung des gesamten Störsignals ist.

Ähnliche Verhältnisse treten bei Gleichkanalstörungen auf. Die Empfängereingangsspannung e(t) ergibt sich in diesem Fall aus der vektoriellen Addition der Spannung des Nutzsignals und der Spannung des Störsignals. Betrachtet man ein kurzes Zeitintervall, in dem die Einhüllenden beider Signale sich nur unwesentlich verändern, so weist die Einhüllende des resultierenden Signals (= Betrag des entsprechenden Zeigers) Schwankungen auf, deren Amplitude der Amplitude des Störsignals entspricht. Die Änderungsgeschwindigkeit des Störsignals hängt direkt mit der Differenz der momentanen Frequenzen von Nutz- und Störsignal zusammen. Da beide Signale den gleichen Übertragungsbedingungen unterworfen und asynchron moduliert sind, kann diese Differenz (gleiche Trägerfrequenz vorausgesetzt) zwischen 0 und dem doppelten Frequenzhub schwanken.

Das Spektrum der daraus resultierenden Amplitudenschwankungen kann bei einem gegebenen Modulationsverfahren und unter der Annahme statistisch unabhängiger Basisbandsignale getrennt für Nutz- und Störsignal ermittelt werden, so daß von der Leistung in einem bestimmten Frequenzband

auf die gesamte Störleistung geschlossen werden kann. Beim erfindungsgemäßen Verfahren kann somit auch die Gleichkanalstörung gemessen werden, wenn das Spektrum der resultierenden Einhüllenden wesentlich breiter ist als das der Nutzfeldstärke. Dies ist im allgemeinen erfüllt, wenn für den Frequenzhub

$$(4) \qquad H \gg 2f_D$$

gilt.

In Fig. 4 ist das bei einer Meßfahrt aufgenommene Leistungsdichte-Spektrum dargestellt. Dieses Spektrum ist bei einer COS-FFSK-Modulation, bei 3,6 kHz Hub, bei 948 MHz und bei einer Fahrzeuggeschwindigkeit von 42 km/h gemessen worden. Der erhöhte Leistungsanteil bei höheren Frequenzen für die Überlagerung von Nutz- und Störsignal ist deutlich erkennbar.

In Fig. 5 ist der zeitliche Verlauf der Feldstärke über 2m der Meßfahrt gemäß Fig. 4 dargestellt. In der Überlagerung sind sowohl die schnellen Schwankungen der Feldstärke, verursacht durch das Gleichkanalstörsignal, als auch die langsamen Schwankungen der Feldstärke, verursacht durch das Fading des Nutzsignals, erkennbar.

0198548

PHD 85 322 EP
20.02.1986

Philips Patentverwaltung GmbH
N.V. Philips'Gloeilampenfabrieken

Patentansprüche

1. Verfahren zur Qualitätsmessung von Funkübertragungskanälen eines Funkübertragungssystems mit ortsfesten und/oder beweglichen Funkstationen und mit zwischen diesen bestehenden Funkübertragungskanälen, auf welchen die zu übertragende Nachricht einen hochfrequenten Träger frequenz- und/ oder phasenmoduliert, bei dem aus dem Empfängereingangssignal (e(t)) durch Filterung und Mittelung der gefilterten Signale ein Qualitätsindikator (QI) abgeleitet wird, dadurch gekennzeichnet, daß durch Störungen verursachte schnelle Schwankungen von durch Fading verursachten langsamen Schwankungen der Amplitude des Empfängereingangssignals (e(t)) getrennt und gemessen werden und daß der Qualitätsindikator (QI) aus den Meßgrößen von schnellen und langsamen Schwankungen abgeleitet wird.

2. Verfahren nach Anspruch 1, dadurch gekennzeichnet, daß das Leistungsverhältnis von schnellen zu langsamen Schwankungen gemessen wird.

3. Verfahren nach Anspruch 1, dadurch gekennzeichnet, daß der lineare Mittelwert der langsamen Schwankungen gemessen wird und ins Verhältnis zum quadratischen Mittelwert der schnellen Schwankung gesetzt wird.

4. Schaltungsanordnung zur Durchführung des Verfahrens nach Anspruch 1, dadurch gekennzeichnet, daß zur Trennung von schnellen und langsamen Schwankungen der Amplituden des Empfängereingangssignals (e(t)) ein am Ausgang eines ersten mit einer Empfängereingangsstufe (1) verbundenen AM-Demodulator (2) auftretendes Spannungssignal (u(t)) sowohl einem Bandpaß (3) als auch einem Tiefpaß (7) zugeführt wird, wobei der Bandpaß (3) mit der Serienschaltung aus einem zweiten AM-Demodulator (4) und einem Kurzzeitintegrator (5) und der Tiefpaß (7) mit einem weiteren Kurzzeitintegrator (8) verbunden ist und daß in einer mit den beiden Kurzzeitintegratoren (5, 8) verbundenen Verknüpfungsschaltung (10) der Qualitätsindikator (QI) abgeleitet wird.

5. Schaltungsanordnung nach Anspruch 4, <u>dadurch gekennzeichnet</u>, daß die Verknüpfungsschaltung (10) aus zwei logarithmischen Verstärkern (6, 9) und einer Einrichtung (11) zur Bildung der Differenz zwischen den Ausgangssignalen der beiden logarithmischen Verstärkern (6, 9) besteht.

0198548

FIG.1

FIG. 2

FIG. 3

1·Ⅱ·PHD 85–322

FIG. 4

FIG.5

2-II-PHD 85-322